# FASCICULE DE BREVET EUROPEEN

(11) **EP 0 622 560 B1**
(45) Date de publication et mention de la délivrance du brevet: **27.12.1996**
(21) Numéro de dépôt: 94400884.6
(22) Date de dépôt: 25.04.1994
(51) Int. Cl.: F16F 1/36, B60K 5/12

(54) **Support antivibratoire à dispositif de limitation des débattements en extension**
Gegenschwingungslager mit Vorrichtung zur Begrenzung der Dehnungsbewegungen
Anti-vibration support with extension-limiting device

(30) Priorité: 28.04.1993 FR 9305014
(43) Date de publication de la demande: 02.11.1994
(73) Titulaire: HUTCHINSON, F-75008 Paris (FR)
(72) Inventeur: Mellon, Paul, F-28200 Chateaudun (FR); Visage, Hervé, F-28200 Chateaudun (FR); JONNARD Daniel, 28200 CLOYES (FR)
(74) Mandataire: Picard, Jean-Claude Georges

(56) Documents cités:
- EP-A- 0 314 539
- FR-A- 2 340 834

## Description

La présente invention concerne un support antivibratoire à dispositif de limitation de ses débattements en extension, ce support comportant une partie rigide propre à être fixée sur un premier élément de structure, et une partie déformable ou mobile propre à être fixée sur un second élément de structure, ce dispositif étant constitué par un câble de matériau pratiquement inextensible, coiffant ladite partie déformable ou mobile. Un tel support est connu du FR-A-2340834.

Le premier élément de structure pourra être constitué par exemple par un châssis de véhicule, et le second élément de structure par le moteur à combustion interne du véhicule, l'invention ayant évidemment pour but, dans ce cas, de limiter la transmission des vibrations du moteur au châssis.

Le but de la présente invention est d'obtenir un dispositif de limitation simple, bon marché, facile à poser et qui ne risque pas d'engendrer des bruits, du fait des vibrations.

A cet effet, un support antivibratoire conforme à l'invention est caractérisé en ce que les extrémités dudit câble sont accrochées dans des encoches ménagées dans des pattes solidaires de ladite partie rigide.

Avantageusement, lesdites pattes s'étendent sensiblement perpendiculairement à la direction principale desdits déplacements relatifs, ledit câble ayant la forme générale d'un arceau.

Avantageusement encore, lesdites encoches sont constituées par un espace ménagé entre deux doigts desdites pattes, les extrémités dudit câble passant entre ces doigts et étant retenues par un embout notablement plus épais que le câble et prenant appui sous la patte correspondante. Cet embout pourra être simplement serti aux extrémités du câble, lequel sera généralement constitué d'une tresse de fils d'acier, de kevlar, de fibres de carbone, de verre, etc., ce câble étant éventuellement entouré d'une gaine de matière plastique.

La présente invention peut encore s'appliquer au cas des supports du type dans lequel ladite partie rigide comporte une embase de fixation audit premier élément de structure, et une platine de forme arquée propre à être fixée sur ladite embase. Il pourra s'agir notamment du cas dans lequel cette platine, supposée s'étendre horizontalement sur ladite embase, porte dans sa zone centrale un tronçon vertical destiné à s'engager après montage dans une lumière de forme correspondante ménagée sur une structure solidaire du moteur, ceci pour limiter les débattements de ce dernier, par exemple vers l'avant ou vers l'arrière. En principe, une telle platine sera fixée sur l'autre élément de structure, c'est-à-dire dans ce cas sur le châssis du véhicule, en même temps et par les mêmes moyens que ceux qui assujettissent sur ce châssis l'embase de fixation précitée.

Dans cette hypothèse, un support conforme à l'invention pourra être modifié en ce que lesdites pattes sont constituées aux extrémités de ladite platine, et en ce que ladite embase comporte des logements pour la réception desdits embouts du câble.

Ainsi on voit que le montage sur un tel type de support du câble limiteur des débattements ne présentera aucune difficulté.

Quel que soit le mode de réalisation ou l'application de l'invention, le support pourra encore être modifié en ce que ladite partie déformable ou mobile porte un revêtement de matière élastique, au moins dans les zones sur lesquelles portent le câble et ses embouts.

Grâce à cette dernière disposition, les battements éventuels du câble sur cette partie déformable ou mobile n'engendreront ni bruit ni usure. Un résultat semblable pourrait être obtenu en enrobant le câble dans une gaine de matière plastique ou tout autre matériau approprié, propre à étouffer les bruits.

Des modes d'exécution de l'invention vont maintenant être décrits à titre d'exemples nullement limitatifs, avec référence aux figures du dessin ci-annexé, dans lequel :
- la figure 1 est une vue en plan d'un support antivibratoire conforme à l'invention ;
- la figure 2 est une vue en coupe selon la ligne II-II de la figure 1 ;
- la figure 3 est une vue en coupe axiale partielle agrandie montrant une variante du mode de réalisation des figures 1 et 2 ;
- la figure 4 est une vue en plan partielle de la variante de la figure 3 ;
- la figure 5 est une vue en plan d'une autre application de support antivibratoire selon l'invention ; et
- la figure 6 est une vue en élévation, avec coupe verticale partielle, du support de la figure 5.

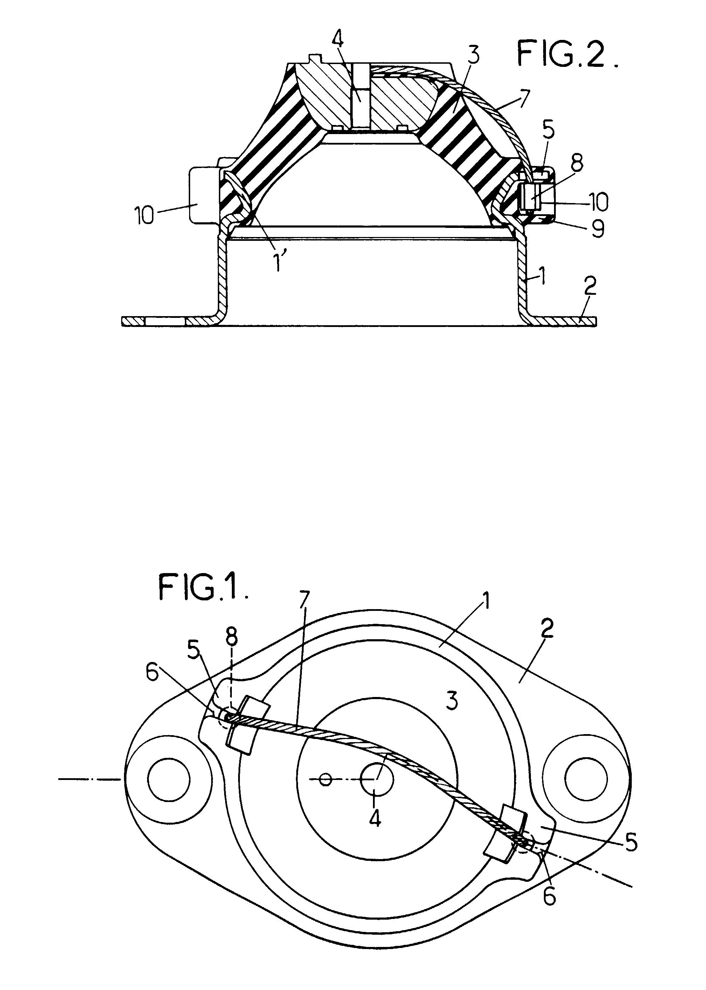

Dans le mode de réalisation des figures 1 et 2, la partie rigide 1 comporte une base 2 d'appui et de fixation sur un premier élément de structure (non représenté) constitué par exemple par un élément de châssis d'un véhicule automobile. La partie mobile ou déformable est référencée en 3 ; elle comporte un cône d'élastomère moulé dont la base est adhérisée sur une collerette 1' de la partie rigide 1 et dont le sommet porte des moyens rigides 4 permettant sa liaison à ce que l'on a appelé plus haut "le second élément de structure", par exemple un moteur à combustion interne du véhicule.

Comme on le voit mieux sur la vue en plan de la figure 1, la collerette précitée 1' de la partie rigide 1 comporte deux pattes pliées diamétralement opposées 5 présentant chacune une encoche 6 s'ouvrant radialement vers l'extérieur, dans lesquelles encoches viennent s'engager les deux extrémités d'un câble 7 constitué par exemple d'une tresse d'acier coiffant la partie déformable 3. Les extrémités de ce câble sont maintenues accrochées dans lesdites pattes 5 par l'intermédiaire d'embouts sertis 8 en appui sous les pattes 5. Comme on le voit sur la figure 2, l'extrémité du câble 7 (et éventuellement de l'embout serti 8) vient en appui sur le fond 9 d'un alvéole 10 venu de moulage avec la partie conique 3 en élastomère, ce qui permet d'éviter les battements de l'embout contre les pattes métalliques 5 ; de toute façon, il est à noter que les pattes 5 sont enrobées dans la masse d'élastomère 3, ce qui évite tout claquement métallique à ce niveau.

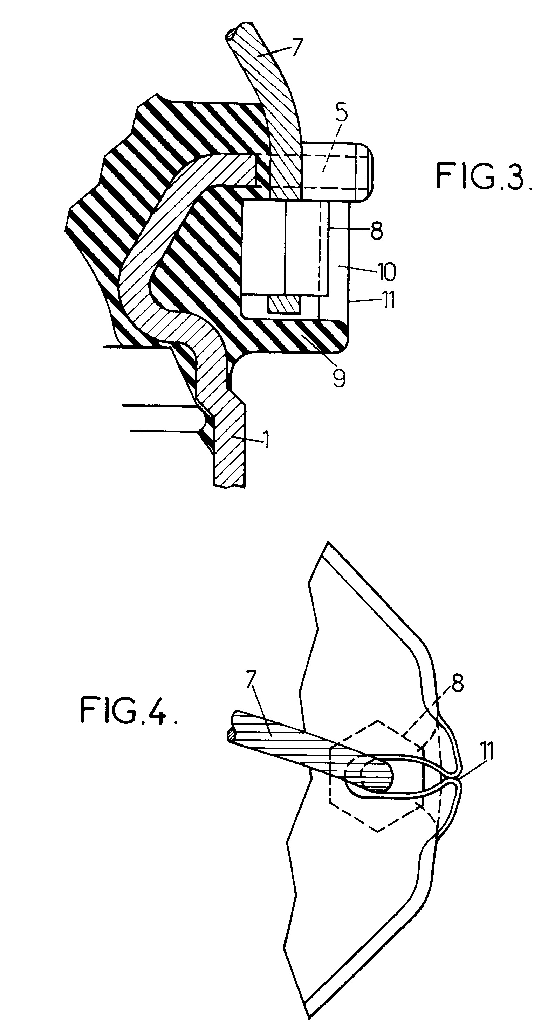

Le mode de réalisation des figures 3 et 4 est tout à fait semblable au mode de réalisation qui vient d'être décrit et n'en constitue qu'une variante. Pour cette raison on a utilisé sur ces figures les mêmes références que sur les figures 1 et 2 pour désigner les mêmes éléments ou des éléments jouant le même rôle. Dans cette variante l'embout 8 est réalisé sous la forme d'un bloc hexagonal, là encore en appui sous le revêtement d'élastomère des pattes 5.

On voit en outre, en observant la vue en plan de la figure 4, que l'alvéole 10 dans lequel est logé cet embout 8 se referme latéralement grâce à des lèvres 11 qui, après montage, empêchent tout échappement du câble 7.

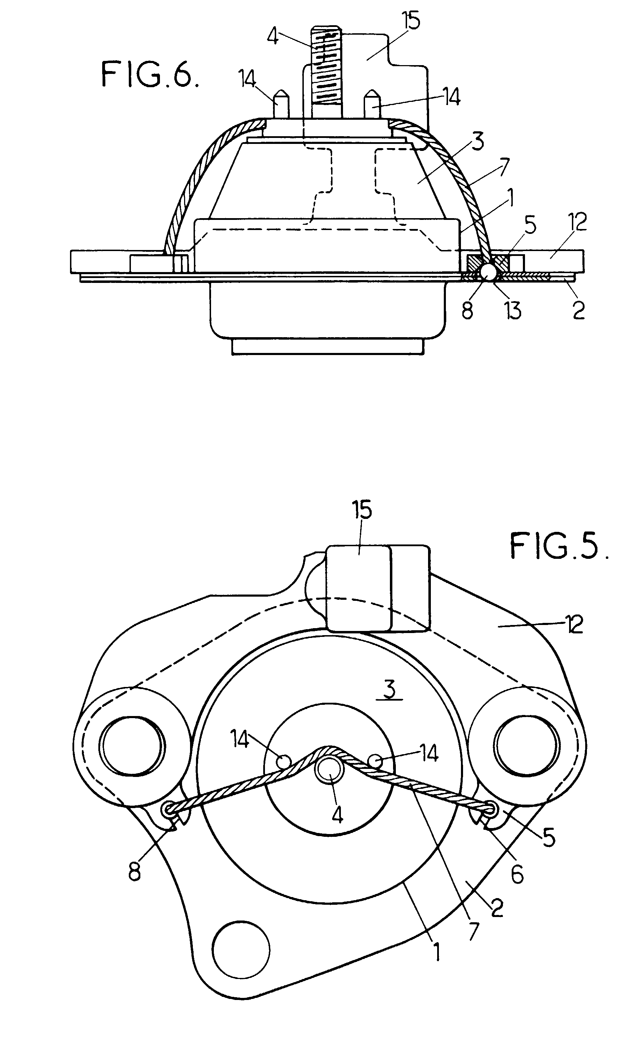

Enfin le mode de réalisation représenté aux figures 5 et 6 concerne l'application de l'invention au cas des supports dans lesquels ce que l'on a appelé plus haut "la partie rigide 1" comporte d'une part une embase de fixation 2, et d'autre part une platine de forme arquée 12 propre à être fixée sur l'embase par les mêmes moyens que ceux qui assujettissent l'ensemble sur le premier élément de structure, à savoir, dans le cas d'application évoqué, le châssis du véhicule.

Dans ce mode d'application, il est avantageux de prévoir le blocage des embouts 8 du câble 7 dans des pattes 5 à encoches 6, pattes qui constituent les extrémités de la platine arquée 12. De cette manière les extrémités du câble 7 peuvent être engagées dans les encoches 6 avant montage de la platine sur l'embase de la partie rigide, la fixation de la platine sur l'embase s'effectuant par la suite avec réception des embouts 8 du câble dans des logements 13 de cette embase 2.

Les moyens de fixation de la platine sur l'embase et de l'embase sur le châssis du véhicule n'ont pas été représentés sur les figures 5 et 6, mais ils peuvent bien entendu être constitués de toute façon appropriée. On voit sur la vue en plan de la figure 5 que le câble 7 peut très facilement passer autour du goujon de fixation 4 de la partie mobile du support sur la pièce reliée au moteur du véhicule; ce câble peut même être maintenu en place avant montage par deux pions de positionnement 14.

Enfin on a référencé pour mémoire en 15 le tronçon vertical qui, comme on l'a indiqué plus haut, est destiné à s'engager après montage dans une lumière de forme correspondante de la structure solidaire du moteur, pour en limiter les débattements.

## Revendications

1. Support antivibratoire à dispositif de limitation de ses débattements en extension, ce support comportant une partie rigide (1) propre à être fixée sur un premier élément de structure, et une partie déformable ou mobile (3) propre à être fixée sur un second élément de structure, ce dispositif étant constitué par un câble (7) de matériau pratiquement inextensible, coiffant ladite partie déformable ou mobile (3), caractérisé en ce que les extrémités dudit câble sont accrochées dans des encoches (6) ménagées dans des pattes (5) solidaires de ladite partie rigide (1).

2. Support selon la revendication 1, caractérisé en ce que lesdites pattes (5) s'étendent sensiblement perpendiculairement à la direction principale desdits déplacements relatifs, ledit câble (7) ayant la forme générale d'un arceau.

3. Support selon la revendication 1 ou 2, caractérisé en ce que lesdites encoches (6) sont constituées par un espace ménagé entre deux doigts desdites pattes, les extrémités dudit câble (7) passant entre ces doigts et étant retenues par un embout (8) notablement plus épais que le câble (7) et prenant appui sous la patte (5) correspondante.

4. Support selon la revendication 3, caractérisé en ce que ledit embout (8) est logé dans un alvéole (10) venu de moulage avec ladite partie déformable (3), laquelle est constituée d'une masse élastique moulée.

5. Support selon la revendication 4, caractérisé en ce que ledit alvéole (10) se referme latéralement grâce à des lèvres (11) d'encliquetage dudit embout.

6. Support selon l'une quelconque des revendications précédentes, caractérisé en ce que lesdits embouts (8) sont sertis aux extrémités dudit câble (7), lequel est constitué d'une tresse de fils d'acier, de kevlar, de fibres de carbone, de verre, etc., ce câble (7) étant éventuellement entouré d'une gaine de matière plastique.

7. Support selon la revendication 2 ou 3, caractérisé en ce que ladite partie rigide (1) comporte une embase (2) de fixation audit premier élément de structure, et une platine (12) de forme arquée propre à être fixée sur ladite embase, en ce que lesdites pattes (5) sont constituées aux extrémités de ladite platine (12), et en ce que ladite embase (2) comporte des logements (13) pour la réception desdits embouts (8).

8. Support selon l'une quelconque des revendications précédentes, caractérisé en ce que ladite partie déformable ou mobile (3) porte un revêtement de matière élastique, au moins dans les zones sur lesquelles portent le câble (7) et ses embouts (8).

## Patentansprüche

1. Gegenschwingungslager mit Vorrichtung zur Begrenzung der Dehnungsbewegungen, enthaltend ein starres Teil (1), das auf einem ersten Bauelement befestigt werden kann, und ein verformbares oder bewegliches Teil (3), das auf einem zweiten Bauelement befestigt werden kann, wobei die Vorrichtung zur Begrenzung der Dehnungsbewegungen aus einem Kabel (7) aus praktisch unelastischem Material besteht und das verformbare oder mobile Teil (3) überspannt, dadurch gekennzeichnet, daß die Kabelenden in Einkerbungen (6) gehalten werden, welche in den festen Halterungen (5) des starren Teiles (1) angeordnet sind.

2. Lager nach Anspruch 1, dadurch gekennzeichnet, daß sich die Halterungen (5) im wesentlichen senkrecht zur Hauptrichtung der relativen Verschiebung erstrecken, wobei das Kabel (7) eine im allgemeinen gekrümmte Form aufweist.

3. Lager nach Anspruch 1 oder 2, dadurch gekennzeichnet, daß die Einkerbungen (6) durch den zwischen den beiden Klauen der Halterungen ausgebildeten Zwischenraum gebildet werden, wobei die Enden des Kabels (7) zwischen den Klauen hindurchgeführt und von einer Klemmvorrichtung (8) festgehalten werden, die wesentlich dicker ist als das Kabel (7), und anschließend unter der entsprechenden Halterung (5) gelagert werden.

4. Lager nach Anspruch 3, dadurch gekennzeichnet, daß die Klemmvorrichtung (8) in einem zusammen mit dem verformbaren Teil (3) gegossenen Hohlraum (10) aufgenommen ist, wobei das verformbare Teil (3) aus einer elastischen Gußmasse besteht.

5. Lager nach Anspruch 4, dadurch gekennzeichnet, daß der Hohlraum (10) mit Hilfe von Sperrlippen (11) der Klemmvorrichtung (8) seitlich verschlossen werden kann.

6. Lager nach einem der vorhergehenden Ansprüche, dadurch gekennzeichnet, daß die Klemmvorrichtungen (8) die Enden des Kabels (7) umfassen, welches aus einem Geflecht aus Stahldraht, Kevlar, Karbonfäden, Glasfäden, usw. besteht, wobei das Kabel (7) gegebenenfalls von einer Hülle aus Plastikmaterial umgeben ist.

7. Lager nach Anspruch 2 oder 3, dadurch gekennzeichnet, daß das starre Teil (1) eine Befestigungsfläche (2) am ersten Bauelement enthält, und eine gekrümmte Platte (12) besitzt, die auf der Fläche (2) befestigt ist, wobei die Halterungen (5) an den Enden der Platte (12) angebracht sind und wobei die Befestigungsfläche (2) Lagerungen (13) zur Aufnahme der Klemmvorrichtungen (8) aufweist.

8. Lager nach einem der vorhergehenden Ansprüche, dadurch gekennzeichnet, daß das verformbare oder bewegliche Teil (3) einen Überzug aus elastischem Material trägt, zumindest in den Bereichen, auf denen das Kabel (7) und seine Klemmvorrichtungen (8) gehalten werden.

## Claims

1. Anti-vibration support with a device for limiting its extension movements, this support having a rigid part (1) suitable for being fixed to a first structural member, and a deformable or movable part (3) suitable for being fixed to a second structural member, this device consisting of a cable (7) made of practically inextensible material, fitting over the said deformable or movable part (3), characterised in that the ends of the said cable are attached in recesses (6) formed in lugs (5) integral with the said rigid part (1).

2. Support according to Claim 1, characterised in that the said lugs (5) extend substantially perpendicularly to the principal direction of the said relative movements, the said cable (7) having the general shape of an arch.

3. Support according to Claim 1 or 2, characterised in that the said recesses (6) consist of a space formed between two fingers on the said lugs, the ends of the said cable (7) passing between these fingers and being retained by a ferrule (8) which is appreciably thicker than the cable (7) and bears underneath the corresponding lug (5).

4. Support according to Claim 3, characterised in that the said ferrule (8) is housed in an alveolus (10) moulded in one piece with the said deformable part (3), which consists of a moulded elastic mass.

5. Support according to Claim 4, characterised in that the said alveolus (10) is closed laterally by means of lips (8) for the snapping-in of the said ferrule.

6. Support according to any one of the preceding claims, characterised in that the said ferrules (8) are crimped at the ends of the said cable (7), which consists of a braid of steel or Kevlar wires, carbon or glass fibres, etc, this cable (7) being optionally surrounded by a plastic sheath.

7. Support according to Claim 2 or 3, characterised in that the said rigid part (1) has a base (2) for fixing to the said first structural member, and an arched plate (12) suitable for being fixed to the said base, in that the said lugs (5) are formed at the ends of the said plate (12), and in that the said base (2) has housings (13) for receiving the said ferrules (8).

8. Support according to any one of the preceding claims, characterised in that the said deformable or movable part (3) bears a covering of elastic material, at least in the areas on which the cable (7) and its ferrules (8) bear.
